# EUROPEAN PATENT SPECIFICATION

(11) **EP 3 683 426 B1**
(45) Date of publication and mention of the grant of the patent: **03.05.2023**
(21) Application number: 19151980.0
(22) Date of filing: 15.01.2019
(51) Int. Cl.: F02C 9/34, F01D 19/00, F01D 21/00, F02C 6/00

(54) **METHOD FOR OPERATING A GAS TURBINE POWER PLANT AND GAS TURBINE POWER PLANT**
VERFAHREN FÜR DEN BETRIEB EINES GASTURBINENKRAFTWERKS UND GASTURBINENKRAFTWERK
PROCÉDÉ DE FONCTIONNEMENT D'UNE INSTALLATION DE TURBINE À GAZ ET INSTALLATION DE TURBINE À GAZ

(43) Date of publication of application: 22.07.2020
(73) Proprietor: Ansaldo Energia Switzerland AG, 5401 Baden (CH)
(72) Inventor: APPEL, Christoph, 5222 UMIKEN (CH); SINGLA, Ghislain, 3013 BERN (CH); FUX, Samuel, 5415 NUSSBAUMEN (CH); MÜLLER, Eric, 8002 ZÜRICH (CH)
(74) Representative: Andreotti, Erika

(56) References cited:
- US-A- 5 024 055
- US-A- 5 465 569
- US-A1- 2009 094 960
- US-A1- 2013 219 904
- US-A1- 2018 266 333

## Description

### TECHNICAL FIELD

The present invention relates to a method for operating a gas turbine power plant and to a gas turbine power plant for the production of electrical energy. The power plant can be a single or combined cycle power plant.

### BACKGROUND

A known type of gas turbine power plant comprises a compressor, a combustor assembly and a turbine, which is arranged downstream of the combustor assembly.

The compressor is provided with variable inlet guide vanes (VIGV), being adjustable vanes provided at the entrance of the compressor in order to regulate the amount of air entering into the compressor. At their position of maximum opening the variable inlet guide vanes allow entrance of the maximum air mass flow into the compressor and vice versa at their position of minimum opening the variable inlet guide vanes allow entrance of the minimum amount of air mass flow into the compressor.

The gas turbine power can be modulated by regulating the variable inlet guide vane position and the turbine inlet temperature. At constant turbine inlet temperature, the load between the first and the second combustion combustor can be modulated to get the required emissions at given exhaust temperature and variable inlet guide vane position.

If the power plant is of the combined type, the power plant further comprises a steam cycle having a reheat boiler (Heat Recovery Steam Generator), fed with exhaust gas from the gas turbine, a steam turbine, a condenser and a pump. Typically, this kind of power plant further has a stack, for discharging the exhaust gas that have passed through the reheat boiler, and one or more electric generators connected to the gas turbine and/or to the steam turbine.

The operation of these power plants has to meet mechanical and thermal constraints and emission limits.

In order to reduce these emissions and to increase operational flexibility, sequential combustor assemblies can be used. An example of such a combustor assembly is disclosed in document US5465569.

The sequential combustor assembly comprises a first combustor and a second combustor arranged downstream the first combustor. The first combustor and the second combustor can have same or different design (i.e. annular or can design).

Between the first combustor and the second combustor, a mixer or a high-pressure turbine can be provided.

The gas turbine power plant can be started by introducing and operating the first combustor of a gas turbine with sequential combustion during acceleration of the rotor towards nominal speed. After synchronization the gas turbine plant starts to load from the minimum load up to a baseload. In the early phase of loading, the second combustor is brought into operation. The second combustor should be activated by supplying it a minimum fuel flow rate to avoid hot gas recirculation in the fluid distribution system. Analogously, also the deactivation of the second combustor should be made stepwise, from the minimum fuel flow rate to zero. In these cases (activation and deactivation) an uncontrolled power jump of several MW can occur.

An uncontrolled power jump could prejudice the lifetime of some parts of the gas turbine plant, such as the rotor parts or the parts of the combustor assembly and of the turbine normally in contact with the hot gas.

Moreover, an uncontrolled power jump could compromise the emission compliance and frequency response capability of the gas turbine power plant.

### SUMMARY

The object of the present invention is therefore to provide a method for operating a gas turbine power plant which enables avoiding or at least mitigating the described drawbacks.

In particular, it is an object of the present invention to provide a method for operating a gas turbine power plant able to mitigate the power jump occurring when one of the combustion stages following the first one are activated or deactivated. In view of the above object, the present invention relates to a method for operating a gas turbine power plant; the gas turbine power plant comprising a compressor, a sequential combustor assembly and a turbine arranged downstream the combustor assembly; the sequential combustor assembly comprises a first combustor and a second combustor arranged downstream the first combustor; wherein between the first combustor and the second combustor a mixer or a high pressure turbine is arranged; wherein the second combustor comprises at least one combustion stage; the method comprising:
- operating the gas turbine power plant at partial load;
- during the partial load operation, supplying a first fuel flow rate to the first combustor and subsequently igniting or switching off at least one combustion stage of the second combustor;
- varying the first fuel flow rate when the combustion stage of the second combustor is ignited or switched off so as to keep the variation of the power output of the gas turbine power plant comprised in a compensation range; the compensation range being comprised between zero and an upper limit defined by the operative limits of the sequential combustor assembly.

In this way the lifetime of combustor and turbine hot gas parts is increased and the frequency response capability of the gas turbine power plant is improved, maintaining at the same time, the emissions under the defined limits.

According to an embodiment of the present invention, varying the first fuel flow rate is made on the basis of a temperature downstream of the first combustor and upstream of the second combustor.

According to an embodiment of the present invention, varying the first fuel flow rate comprises step varying the first fuel flow rate.

According to an embodiment of the present invention, varying the first fuel flow rate comprises gradually varying the first fuel flow rate.

According to an embodiment of the present invention, the compensation range is defined by the operative temperature limits of the first combustor.

According to an embodiment of the present invention, operating the gas turbine power plant at partial load comprises operating at increasing partial load or at decreasing partial load.

According to an embodiment of the present invention, at increasing partial load, subsequently igniting or switching off at least one combustion stage of the second combustor comprises igniting the second combustor by supplying a minimum fuel flow rate to the second combustor.

According to an embodiment of the present invention, at decreasing partial load, subsequently igniting or switching off at least one combustion stage of the second combustor comprises switching off the second combustion stage by reducing the second fuel flow rate from a minimum fuel flow rate to zero.

According to an embodiment of the present invention, at increasing partial load, varying the first fuel flow rate comprises reducing the first flow rate so as to keep the increase of the power output of the gas turbine power plant comprised in the compensation range.

According to an embodiment of the present invention, at decreasing partial load, varying the first fuel flow rate comprises increasing the first flow rate so as to keep the reduction of the power output of the gas turbine power plant comprised in the compensation range.

It is also an object of the present invention to provide a gas turbine power plant which enables avoiding or at least mitigating the described drawbacks. Therefore the present invention relates to a gas turbine power plant as claimed in anyone of claims from 11 to 15.

### BRIEF DESCRIPTION OF THE DRAWINGS

The present invention will now be described with reference to the accompanying drawings, which illustrate some non-limitative embodiment, in which:
- Figure 1 is a schematic representation of the gas turbine power plant according to the present invention;
- Figures 2a, 2b, 2c are schematic graphs relating to the trends of some variables of the gas turbine power plant in a first operative configuration according to the method of the present invention;
- Figures 3a, 3b, 3c are schematic graphs relating to the trends of some variables of the gas turbine power plant in a second operative configuration according to the method of the present invention.

### DETAILED DESCRIPTION OF EXEMPLARY EMBODIMENTS

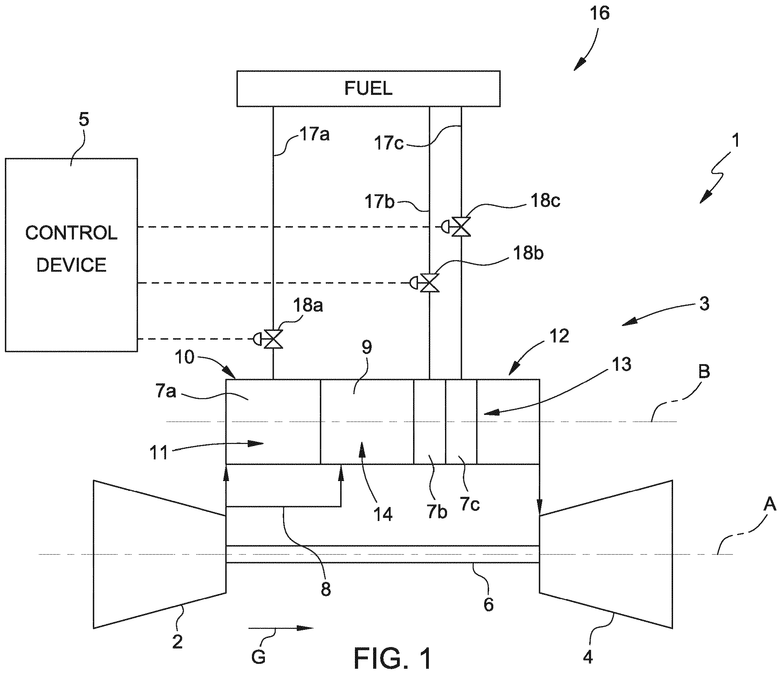

In figure 1 reference numeral 1 indicates a gas turbine power plant (with parts omitted for sake of clarity). The power plant 1 comprises a compressor 2, a sequential combustor assembly 3, a turbine 4 and a control device 5. The compressor 2 and the turbine 3 extend along a main axis A.

The power plant 1 can be a single or combined cycle power plant. The sequential combustor assembly 3 comprises a first combustor 10 and a second combustor 12 arranged downstream of the first combustor 10 along the gas flow direction G.

Between the first combustor 10 and the second combustor 12, a mixer 9 is arranged. According to a variant not illustrated, instead of the mixer a high-pressure gas turbine can be arranged between the first combustor 10 and the second combustor 12.

In use, part of the airflow compressed in the compressor 2 is mixed with fuel and is burned in first combustor 10 of the sequential combustor assembly 3.

Preferably, hot gas from the first combustor 10 is diluted with compressed air coming from the compressor 3 through a by-pass line 8 before entering into the second combustor 12. The burned mixture is then expanded in the turbine 4 and converted into mechanical power by a shaft 6 which is connected to a generator (not shown).

The second combustor 12 comprises one or more combustion stages arranged sequentially along the gas flow direction G. In the non-limiting example here disclosed and illustrated, the second combustor 12 comprises two combustion stages 7b 7c schematically represented in figure 1.

The first combustor 10 is a first combustion stage 7a as being the first combustion stage of the sequence, and the following combustion stages 7b, 7c of the second combustor 12 are arranged in sequence downstream of the first combustion stage 7a along the gas flow direction G.

The first combustor 10 defines a first combustion chamber 11. The second combustor 12 defines a second combustion chamber 13. The mixer 9 defines a mixing chamber 14.

The first combustion chamber 11, the second combustion chamber 13 and the mixing chamber 14 are in fluidic communication and are defined by a liner (not visible in the attached drawings), which extends along a longitudinal axis B, preferably parallel to the main axis A.

According to a variant not illustrated, the first combustor and the second combustor comprise a different number of combustion stages.

The sequential combustor assembly 3 also comprises a fuel distribution system 16, which is configured to supply fuel to the plurality of combustion stages 7 under the control action of the control device 5.

In the non-limiting example here disclosed and illustrated, the fuel distribution system 16 comprises a fuel distribution line 17 and a respective fuel distribution valve 18 for each one of the combustion stages 7a, 7b, 7c. In other words, the fuel distribution system 16 comprises a first fuel line 17a and a first fuel distribution valve 18a for the first combustor stage 7a and following fuel lines 17b 17c and following fuel distribution valves 18b 18c for the respective combustor stages 7b 7c.

The fuel distribution between the combustion stages of the first combustor 10 and the second combustor 12 is modulated to get the required emissions at given exhaust temperature and variable inlet guide vane position.

In the non-limited example here disclosed the control device 5 is configured to regulate the fuel distribution between the combustion stages of the first combustor 10 and the second combustor 12 via a temperature measurement device (not illustrated) placed downstream of the first combustor 10 and upstream of the second combustor 12. Said temperature measurement device measures a temperature, which will be called in the following TUSC (Temperature Upstream of Second Combustor).

In use, the gas turbine plant 1 as above described can be operated at base load or at partial load, mainly based on the power demand.

In particular, when the power demand is very low the gas turbine plant is operated at minimum environmental load, which is the minimum reachable load without exceeding the pollutants emissions limits.

Therefore, the gas turbine plant 1 can be operated at increasing partial load, for example when it runs from the minimum environmental load to the base load, and at a decreasing partial load, for example when it runs from the base load to the minimum environmental load.

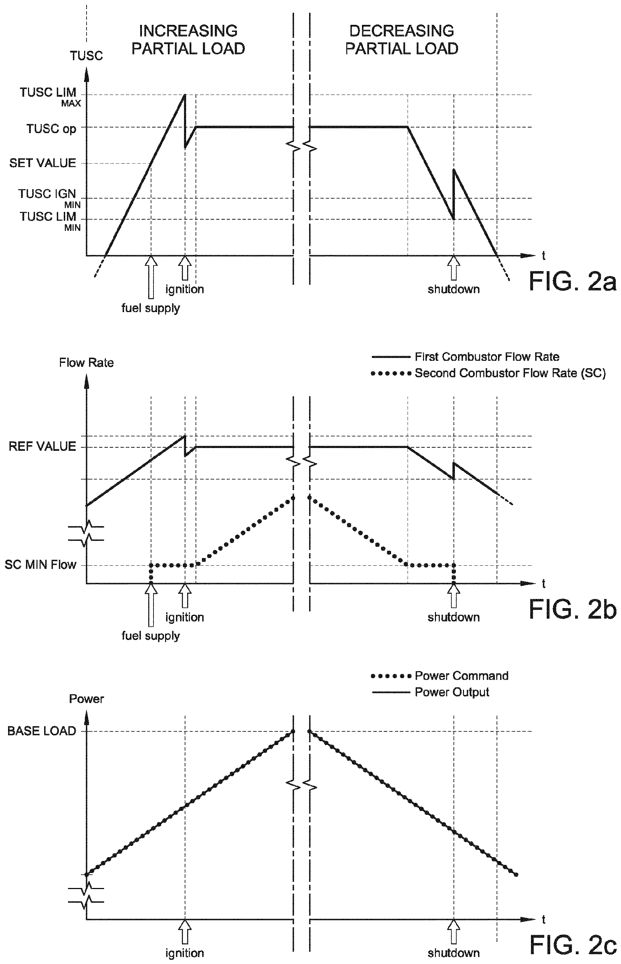

In figure 2a, 2b, 2c the trends of some variables of the gas turbine plant 1 during the operation at increasing partial load and at decreasing partial load are schematically represented. The trends during the operation at base load (corresponding to the central portion represented by an interruption) have been omitted for simplicity.

In particular in figure 2a is represented the trend of the temperature TUSC measured downstream of the first combustor stage 7a (first combustor 10) and upstream of the second combustor 12 (combustion stages 7b 7c).

Looking at figure 2a, the temperature TUSC measured downstream of the first combustor 10 (and upstream of the second combustor 12) is upper and lower limited.

The temperature TUSC is upper limited by a TUSC LIM MAX value, which cannot be exceeded in order to keep safe the parts of the combustor assembly 3.

In addition, during the operation of the sequential combustor assembly 3, TUSC is also lower limited by TUSC LIM MIN in order to avoid instabilities. However, at ignition of the sequential combustor, during the TUSC decrease, TUSC is lower limited by TUSC IGN MIN, which is higher than TUSC LIM MIN, in order to prevent the accidental shutdown of the second combustor 12 immediately after the ignition of the second combustor 12. In figure 2b is represented the trend of the fuel flow rate in the first combustor 10 (upper trend) and the trend of the fuel flow rate in the second combustor 12 (lower trend). If the second combustor 12 comprises more than one combustion stage, the lower trend relates to the combustion stage of the second combustor, which firstly comes into operation. In the non-limiting example here illustrated the combustion stage 7b comes into operation first.

In figure 2c is represented the trend of the power command, which is correlated to the power request, and the trend of the power output.

During the operation at increasing partial load, the control device 5 regulates the fuel distribution valves 18.

In particular during the operation at increasing partial load, the control device 5 is configured to regulate the first distribution valve 18a for supplying a first fuel flow rate to the first combustion stage 7a (first combustor 10); in particular, the control device 5 is configured to regulate the first distribution valve 18a for supplying a gradually increasing first fuel flow rate to the first combustion stage 7a.

The increase of the first fuel flow rate of the first combustion stage 7a depends on the power command.

When the temperature TUSC reaches a predefined SET VALUE, the control device 5 regulates the following distribution valve 18b for supplying a minimum fuel flow rate MIN FLOW to the following combustion stage 7b. In the graphs, the moment in which there is the opening of the following distribution valve 18b for supplying a minimum fuel flow rate MIN FLOW is indicated with "fuel supply".

The following combustion stage 7b does not ignite immediately at the opening of the following distribution valve 18b. In the graphs, the moment in which there is the ignition of the following combustion stage 7b is indicated with "ignition".

When the following combustion stage 7b ignites the control device 5 reduces the first fuel flow rate by regulating the first distribution valve 18a.

In particular, the control device 5 reduces the first fuel flow rate so as to keep the power output close to the power demand.

In other words, the control device 5 reduces the first fuel flow rate so as to avoid or limit a jump of the power output excessively high with respect to the power demand.

In the example illustrated in figures 2a, 2b, 2c the control device 5 reduces with a step decrease the first fuel flow rate so as to completely compensate the minimum flow rate of the following combustion stage 7b. In other words, the reduction in power due to the fuel flow rate reduction in the first combustion stage 7a is equal to the increase in power gained by the fuel flow added into the second combustor 12 (e.g. combustion stage 7b).

As will be described in detail later, a complete compensation in power is not always possible due to the physical and operational limits of some parts of the sequential combustor assembly 3.

With reference to figure 2c, thanks to the regulation of the first fuel flow rate of the first combustion stage 7a, the power output coincides with the power command at the ignition of the following combustion stage 7b. In other words, the jump of the power output at the ignition of the following combustion stage 7b is zero.

During the increasing partial load, after the ignition of the following combustion stage 7b, the first fuel flow rate of the first combustion stage 7a is gradually increased until the temperature TUSC reaches an operative limit TUSC OP for the first combustion stage 7a.

When the temperature TUSC reaches an operative limit TUSC OP the fuel flow rate inside the first combustor 10 (e.g. combustion stage 7a) is kept at a reference flow rate value REF VALUE (corresponding to the flow rate value when the TUSC temperature reaches the operative limit TUSC OP) and the fuel flow rate in the second combustor 12 increases. The increase of the fuel flow rate of the following combustion stage 7b depends on the power command.

During the operation at decreasing partial load, the control device 5 regulates analogously the fuel distribution valves 18.

In particular, during the operation at decreasing partial load, the control device 5 is configured to regulate the first distribution valve 18a so as to keep, for example, the first flow rate constant at a reference flow rate value REF VALUE and to decrease the fuel flow rate in the second combustor 12 (e.g. the combustion stage 7b) until the minimum fuel flow rate MIN FLOW is reached.

When the fuel flow rate in the second combustion chamber 12 (e.g. combustion stage 7b) is equal to the minimum fuel flow rate MIN FLOW, the control device 5 regulates the first distribution valve 18a for supplying a gradually decreasing first fuel flow rate to the first combustor 10, e.g. to combustion stage 7a.

Looking at figure 2a, the temperature TUSC gradually decreases during the gradual decreasing of first fuel flow rate.

When the temperature TUSC, during the gradual decreasing, reaches a predefined value TUSC LIM MIN, the fuel supply to the stage in operation in the second combustor 12 (e.g. combustion stage 7b) is interrupted in order to obtain the shutdown of the stage.

At the shutdown of the combustion stage 7b the control device 5 regulates the first distribution valve 18a for increasing the first fuel flow rate in the first combustor 10 so as to keep the power output closer to the power demand.

In other words the control device 5 increases the first fuel flow rate so as to avoid or limit a jump of the power output excessively high with respect to the power demand.

In the example illustrated in figures 2a, 2b, 2c the control device 5 increases with a step increase the first fuel flow rate in the first combustor 10 so as to completely compensate the decrease in power due to cutting off the second flow rate of the combustion stage 7b of the second combustor 12.

In the non-limitative example here described and illustrated, the amount of fuel increase in the first combustor 10 equals the minimum fuel flow MIN FLOW in the second combustor 12 during its shutdown assuming 100% combustion efficiency in both combustors at this time period.

After the shutdown of the combustion stage 7b of the second combustor 12, the control device 5 gradually reduces the first fuel flow rate if further deloading of the power plant 1 is requested.

The gradual decrease of the second fuel flow rate in the second combustor 12 and the following gradual decrease of the first fuel flow rate in the first combustor 10 depends on the power command.

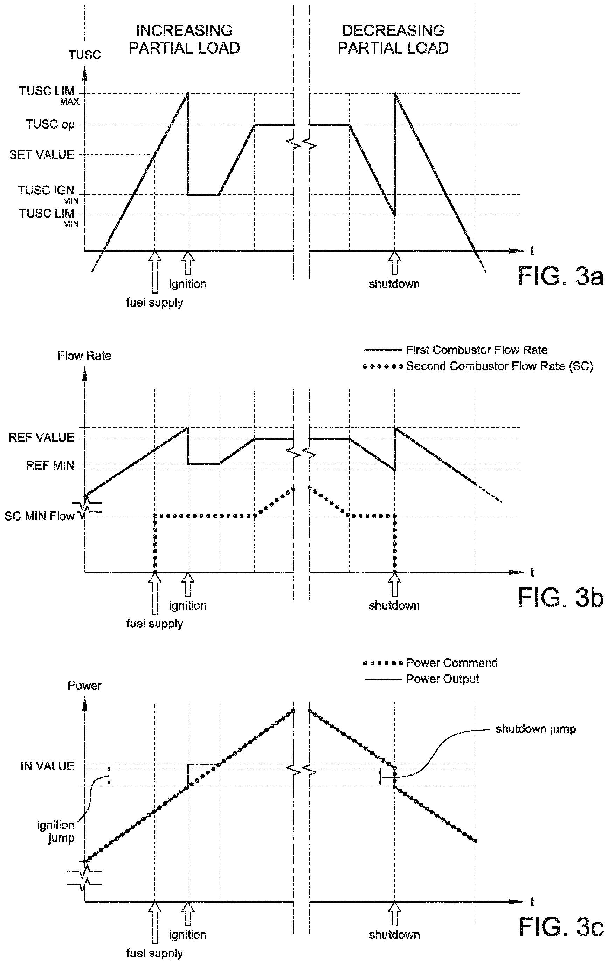

In figures 3a, 3b, 3c the trends of the same variables of the gas turbine plant 1 of figures 2a, 2b, 2c are schematically represented. Figures 3a, 3b, 3c show said trends during the operation at increasing partial load and at decreasing partial load in an operative configuration different from the one shown in figures 2a, 2b, 2c. Also in this case the operation at base load (corresponding to the central portion represented by an interruption) has been omitted for simplicity.

In figures 3a, 3b, 3c the compensation of the power output jump is limited by the physical and operational limits of some parts of the sequential combustor assembly 3.

Looking at figure 3a, the temperature TUSC measured downstream of the first combustor 10 and upstream of the second combustor 12 is upper and lower limited.

The temperature TUSC is upper limited by a TUSC LIM MAX value, which cannot be exceeded in order to keep safe the parts of the combustor assembly 3.

In addition, during the operation of the sequential combustor, TUSC is also lower limited by TUSC LIM MIN in order to avoid instabilities. However, at ignition of the sequential combustor, during the TUSC decrease, TUSC is lower limited by TUSC IGN MIN, which is higher than TUSC LIM MIN, in order to prevent the accidental shutdown of the second combustor 12 immediately after the ignition of the second combustor 12.

The first combustor 10 therefore should be operated so as to keep the temperature in said ranges during the operation of the sequential combustor assembly 3.

During the operation at increasing partial load, the control device 5 is configured to regulate the first distribution valve 18a for supplying a gradually increasing first fuel flow rate to the first combustor 10.

The increase of the first fuel flow rate of the first combustion stage 7a depends on the power command. When the temperature TUSC reaches a predefined SET VALUE, the control device 5 regulates the following distribution valve 18b for supplying a minimum fuel flow rate MIN FLOW to the second combustor 12 (combustion stage 7b). In the graphs, the moment in which there is the opening of the following distribution valve 18b for supplying a minimum fuel flow rate MIN FLOW is indicated with "fuel supply".

The second combustor 12 (e.g. combustion stage 7b) does not ignite immediately at the opening of the following distribution valve 18b. In the graphs, the moment in which there is the ignition of the combustion stage 7b is indicated with "ignition".

Looking at the example of figure 3a the increase of the temperature is upper limited by the TUSC LIM MAX value.

When the second combustor 12 (e.g. combustion stage 7b) ignites, the control device 5 reduces the first fuel flow rate to the first combustor 10 by regulating the first distribution valve 18a.

In particular, the control device 5 reduces the first fuel flow rate so as to keep the power output as close as possible to the power demand. In other words, the control device 5 reduces the first fuel flow rate so as to avoid or limit a jump of the power output excessively high with respect to the power demand.

In the example illustrated in figures 3a, 3b, 3c the control device 5 is configured to reduce, with a step decrease, the first fuel flow rate. However, the step decrease is limited by the lower limit TUSC IGN MIN. Therefore, there is only a partial compensation. In other words, the reduction in power due to the reduction of the first fuel flow rate inside the first combustor 10 is lower than the increase in power gained by the introduction of the minimum flow rate to the second combustor 12(e.g. combustion stage 7b).

With reference to figure 3c, thanks to the regulation of the first fuel flow rate of the first combustor 10, the power output reaches an increased value IN VALUE at the ignition of the second combustor 12 (e.g. combustion stage 7b) which is lower than the one that would have been reached without the compensation. Therefore, there is a limited jump of power output at the ignition of the following combustion stage 7b. The power output jump at the ignition is comprised in a compensation range, which is preferably 0 - 15 MW. More preferably, the compensation range at the ignition is lower than 10 MW.

From the moment of the ignition of the following combustion stage 7b until the power command is equal to the power output IN VALUE, the control device 5 keeps constant the first fuel flow rate of the first combustor 10 at a value REF MIN and the fuel flow rate of the combustion stage 7b at the fuel minimum flow rate MIN FLOW.

When the power command is equal to the power output IN VALUE, the first fuel flow rate of the first combustor 10 is gradually increased until the temperature TUSC reaches an operative limit TUSC OP for the first combustor 10.

When the temperature TUSC reaches the operative limit TUSC OP the first fuel flow rate of the first combustor 10 is kept preferably at a reference flow rate value REF VALUE and the fuel flow rate of the second combustor 12 (e.g. combustion stage 7b) increases. The increase of the fuel flow rate of the combustion stage 7b depends on the power command. During the operation at decreasing partial load, the control device 5 is configured to regulate the first distribution valve 18a so as to keep the first flow rate preferably constant at the reference flow rate value REF VALUE and to decrease the fuel flow rate of the second combustor 12 (e.g. combustion stage 7b) until the minimum fuel flow rate MIN FLOW is reached.

When the fuel flow rate of the following combustion stage 7b is equal to the minimum fuel flow rate MIN FLOW, the control device 5 regulates the first distribution valve 18a for supplying a gradually decreasing first fuel flow rate to the first combustor 10.

When the temperature TUSC, during the gradual decreasing, reaches a predefined value TUSC LIM MIN, the fuel supply to the second combustor (e.g. combustion stage 7b) is interrupted in order to obtain the shutdown of the combustion stage 7b.

At the shutdown of the combustion stage 7b the control device 5 regulates the first distribution valve 18a in order to increase the first fuel flow rate so as to keep the power output closer to the power demand.

In other words the control device 5 increases the first fuel flow rate so as to avoid or limit a jump of the power output excessively high with respect to the power demand.

In the example illustrated in figures 3a, 3b, 3c the control device 5 increases with a step increase the first fuel flow rate so as to compensate the step reduction of the flow rate of the following combustion stage 7b. However the increase is limited by the fact that the temperature TUSC cannot exceed the upper limit TUSC LIM MAX value.

Therefore in the example of figures 3a, 3b, 3c the increase in power due to the increase of the first fuel flow rate is lower than the decrease in power due to the cut off of the second fuel flow rate of the second combustor 12. This implies a limited reduction jump of the power output at the shutdown of the following combustion stage 7b. Preferably, the power output jump at the shutdown is comprised in the compensation range. As stated before, the compensation range is preferably 0-15 MW. More preferably, the compensation range is lower than 10 MW.

After the shutdown of the second combustor 12 (e.g. combustion stage 7b), the control device 5 gradually reduces the first fuel flow rate into the first combustor 10 if further deloading of the plant is requested.

The gradual decrease of the fuel flow rate into the second combustor 12 (e.g. combustion stage 7b) and the gradual decrease of the first fuel flow rate of the first combustor 10 depends on the power command.

According to a variant not disclosed the ignition of the following combustion stage 7c can be compensated analogously by regulating the first fuel flow rate of the first combustor 10 with or without regulating the fuel flow rate of the combustion stage 7b of the second combustor 12 arranged upstream.

Advantageously, thanks to the gas turbine plant and to the method for operating a gas turbine plant according to the present invention, the reduced power output jump can improve the flexibility of the gas turbine plant during black grid restorations.

Moreover the reduced power output jump obtained according to the present invention can improve the lifetime of some parts of the gas turbine plant, such as the rotor parts or the parts of the combustor assembly and of the turbine normally in contact with the hot gas. And can also improve the emission compliance and frequency response capability of the gas turbine power plant.

Finally, it is clear that modifications and variants can be made to the method and to the plant described herein without departing from the scope of the present invention, as defined in the appended claims.

## Claims

1. Method for operating a gas turbine power plant; the gas turbine power plant (1) comprising a compressor (2), a sequential combustor assembly (3) and a turbine (4) arranged downstream the combustor assembly (3); the sequential combustor assembly (3) comprises a first combustor (10) and a second combustor (12) arranged downstream the first combustor (10); wherein between the first combustor (10) and the second combustor (12) a mixer (9) or a high pressure turbine is arranged; wherein the second combustor (12) comprises at least one combustion stage (7b, 7c);
the method comprising:
- operating the gas turbine power plant (1) at partial load;
- during the partial load operation, supplying a first fuel flow rate to the first combustor (10) and subsequently igniting or switching off at least one combustion stage (7b, 7c) of the second combustor (12);
- varying the first fuel flow rate when the combustion stage (7b; 7c) of the second combustor (12) is ignited or switched off so as to keep the variation of the power output of the gas turbine power plant (1) comprised in a compensation range; the compensation range being comprised between zero and an upper limit defined by the operative limits of the sequential combustor assembly (3).

2. Method according to claim 1, wherein varying the first fuel flow rate is made on the basis of a temperature (TUSC) downstream of the first combustor (10) and upstream of the second combustor (12).

3. Method according to claim 1 or 2, wherein varying the first fuel flow rate comprises step varying the first fuel flow rate.

4. Method according to claim 1 or 2, wherein varying the first fuel flow rate comprises gradually varying the first fuel flow rate.

5. Method according to anyone of the foregoing claims wherein the compensation range is defined by the operative temperature limits (TUSC LIM MAX, TUSC LIM MIN) of the first combustor (10).

6. Method according to anyone of the foregoing claims, wherein operating the gas turbine power plant (1) at partial load comprises operating at increasing partial load or at decreasing partial load.

7. Method according to claim 6, wherein, at increasing partial load, subsequently igniting or switching off at least one combustion stage (7b, 7c) of the second combustor (12) comprises igniting the second combustor (12) by supplying a minimum fuel flow rate to the second combustor (12).

8. Method according to claim 5 or 7, wherein, at decreasing partial load, subsequently igniting or switching off at least one combustion stage (7b, 7c) of the second combustor (12) comprises switching off the second combustion stage (7b; 7c) by reducing the second fuel flow rate from a minimum fuel flow rate to zero.

9. Method according to anyone of the claims from 6 to 8, wherein, at increasing partial load, varying the first fuel flow rate comprises reducing the first flow rate so as to keep the increase of the power output of the gas turbine power plant (1) comprised in the compensation range.

10. Method according to anyone of the claims from 6 to 9, wherein, at decreasing partial load, varying the first fuel flow rate comprises increasing the first flow rate so as to keep the reduction of the power output of the gas turbine power plant (1) comprised in the compensation range.

11. Gas turbine power plant comprising:
- a compressor (2), a sequential combustor assembly (3) comprising a first combustor (10) and a second combustor (12) arranged downstream the first combustor (10); wherein between the first combustor (10) and the second combustor (12) a mixer (9) or a high pressure turbine is arranged; wherein the second combustor (12) comprises at least one combustion stage (7b, 7c);
- a turbine (4) arranged downstream the combustor assembly (3) ;
- a fuel distribution system (16), which is configured to supply fuel to the the first combustor (10) and the second combustor (12);
- a control device (5) configured to:
o operate the gas turbine power plant (1) at partial load;
o during the partial load operation, regulate the fuel distribution system (16) so as to supply a first fuel flow rate to the first combustor (10) and subsequently ignite or switch off at least one combustion stage (7a, 7b) of the second combustor (12);
o regulate the fuel distribution system (16) so as to vary the first fuel flow rate when the second combustion stage (7b, 7c) is ignited or switched off so as to keep the variation of the power output of the gas turbine power plant (1) comprised in a compensation range; the compensation range being comprised between zero and an upper limit defined by the operative limits of the sequential combustor assembly (3).

12. Plant according to claim 11, comprising a temperature measurement device placed downstream of the first combustor (10) and upstream of the second combustor (12); the control device (5) being configured to regulate the fuel distribution system (16) on the basis of the temperature (TUSC) measured by the temperature measurement device.

13. Plant according to claim 11 or 12, wherein the compensation range is defined by the operative temperature limits (TUSC LIM MAX, TUSC LIM MIN) of the first combustion stage (7a).

14. Plant according to anyone of claims from 11 to 13, wherein the control device (5) is configured to operate the gas turbine power plant (1) at increasing partial load; wherein, at increasing partial load, the control device (5) is configured to regulate the fuel distribution system (16) so as to reduce the first flow rate to keep the increase of the power output of the gas turbine power plant (1) comprised in the compensation range.

15. Plant according to anyone of the claims from 11 to 14, wherein the control device (5) is configured to operate the gas turbine power plant (1) at decreasing partial load; wherein, at decreasing partial load, the control device (5) is configured to regulate the fuel distribution system (16) so as to increase the first flow rate to keep the reduction of the power output of the gas turbine power plant (1) comprised in the compensation range.

## Patentansprüche

1. Verfahren zum Betreiben eines Gasturbinenkraftwerks;
wobei das Gasturbinenkraftwerk (1) einen Verdichter (2), eine sequentielle Brennkammeranordnung (3) und eine stromabwärts der Brennkammeranordnung (3) angeordnete Turbine (4) umfasst; die sequentielle Brenneranordnung (3) eine erste Brennkammer (10) und eine stromabwärts der ersten Brennkammer (10) angeordnete zweite Brennkammer (12) umfasst; wobei zwischen der ersten Brennkammer (10) und der zweiten Brennkammer (12) ein Mischer (9) oder eine Hochdruckturbine angeordnet ist; wobei die zweite Brennkammer (12) wenigstens eine Verbrennungsstufe (7b, 7c) umfasst;
wobei das Verfahren umfasst:
- Betreiben des Gasturbinenkraftwerks (1) bei Teillast;
- während des Teillastbetriebs, Zuführen eines ersten Brennstoffdurchsatzes zu der ersten Brennkammer (10) und anschließendes Zünden oder Abschalten wenigstens einer Verbrennungsstufe (7b, 7c) der zweiten Brennkammer (12);
- Variieren des ersten Brennstoffdurchsatzes, wenn die Verbrennungsstufe (7b, 7c) der zweiten Brennkammer (12) gezündet oder abgeschaltet wird, um die Variation der Leistungsabgabe des Gasturbinenkraftwerks (1) in einem Kompensationsbereich zu halten; wobei der Kompensationsbereich zwischen Null und einer Obergrenze liegt, die durch die Betriebsgrenzen der sequentiellen Brennkammeranordnung (3) definiert ist.

2. Verfahren nach Anspruch 1, wobei das Variieren des ersten Brennstoffdurchsatzes auf der Grundlage einer Temperatur (TUSC) stromabwärts der ersten Brennkammer (10) und stromaufwärts der zweiten Brennkammer (12) erfolgt.

3. Verfahren nach Anspruch 1 oder 2, wobei das Variieren des ersten Brennstoffdurchsatzes ein schrittweises Variieren des ersten Brennstoffdurchsatzes umfasst.

4. Verfahren nach Anspruch 1 oder 2, wobei das Variieren des ersten Brennstoffdurchsatzes ein allmähliches Variieren des ersten Brennstoffdurchsatzes umfasst.

5. Verfahren nach einem der vorangehenden Ansprüche, wobei der Kompensationsbereich durch die Betriebstemperaturgrenzen (TUSC LIM MAX, TUSC LIM MIN) der ersten Brennkammer (10) definiert ist.

6. Verfahren nach einem der vorangehenden Ansprüche, wobei der Betrieb des Gasturbinenkraftwerks (1) bei Teillast den Betrieb bei steigender Teillast oder bei sinkender Teillast umfasst.

7. Verfahren nach Anspruch 6, wobei bei steigender Teillast das anschließende Zünden oder Abschalten wenigstens einer Verbrennungsstufe (7b, 7c) der zweiten Brennkammer (12) das Zünden der zweiten Brennkammer (12) durch Zuführen eines minimalen Brennstoffdurchsatzes zu der zweiten Brennkammer (12) umfasst.

8. Verfahren nach Anspruch 6 oder 7, wobei bei sinkender Teillast das anschließende Zünden oder Abschalten wenigstens einer Verbrennungsstufe (7b, 7c) der zweiten Brennkammer (12) das Abschalten der zweiten Verbrennungsstufe (7b; 7c) durch Verringern des zweiten Brennstoffdurchsatzes von einem minimalen Brennstoffdurchsatz auf Null umfasst.

9. Verfahren nach einem der Ansprüche 6 bis 8, wobei bei steigender Teillast das Variieren des ersten Brennstoffdurchsatzes ein Verringern des ersten Durchsatzes umfasst, derart, dass der Anstieg der Leistungsabgabe des Gasturbinenkraftwerks (1) im Kompensationsbereich gehalten wird.

10. Verfahren nach einem der Ansprüche 6 bis 9, wobei bei sinkender Teillast das Variieren des ersten Brennstoffdurchsatzes ein Erhöhen des ersten Durchsatzes umfasst, derart, dass die Verringerung der Leistungsabgabe des Gasturbinenkraftwerks (1) im Kompensationsbereich gehalten wird.

11. Gasturbinenkraftwerk, umfassend:
- einen Verdichter (2) und eine sequentielle Brennkammeranordnung (3), die eine erste Brennkammer (10) und eine stromabwärts der ersten Brennkammer (10) angeordnete zweite Brennkammer (12) umfasst; wobei zwischen der ersten Brennkammer (10) und der zweiten Brennkammer (12) ein Mischer (9) oder eine Hochdruckturbine angeordnet ist; wobei die zweite Brennkammer (12) wenigstens eine Verbrennungsstufe (7b, 7c) umfasst;
- eine Turbine (4), die stromabwärts der Brennkammeranordnung (3) angeordnet ist;
- ein Brennstoffverteilungssystem (16), das dazu konfiguriert ist, der ersten Brennkammer (10) und der zweiten Brennkammer (12) Brennstoff zuzuführen;
- eine Steuervorrichtung (5), die dazu konfiguriert ist:
o das Gasturbinenkraftwerk (1) bei Teillast zu betreiben;
o während des Teillastbetriebs das Brennstoffverteilungssystem (16) so zu steuern/regeln, dass der ersten Brennkammer (10) ein erster Brennstoffdurchsatz zugeführt wird und anschließend wenigstens eine Verbrennungsstufe (7a, 7b) der zweiten Brennkammer (12) gezündet oder abgeschaltet wird;
o das Brennstoffverteilungssystem (16) so zu steuern/regeln, dass der erste Brennstoffdurchsatz variiert wird, wenn die zweite Verbrennungsstufe (7b, 7c) gezündet oder abgeschaltet wird, um die Variation der Leistungsabgabe des Gasturbinenkraftwerks (1) in einem Kompensationsbereich zu halten; wobei der Kompensationsbereich zwischen Null und einer Obergrenze liegt, die durch die Betriebsgrenzen der sequentiellen Brennkammeranordnung (3) definiert ist.

12. Kraftwerk nach Anspruch 11, das eine Temperaturmessvorrichtung umfasst, die stromabwärts der ersten Brennkammer (10) und stromaufwärts der zweiten Brennkammer (12) angeordnet ist; wobei die Steuervorrichtung (5) dazu konfiguriert ist, das Brennstoffverteilungssystem (16) auf der Grundlage der von der Temperaturmessvorrichtung gemessenen Temperatur (TUSC) zu steuern/regeln.

13. Kraftwerk nach Anspruch 11 oder 12, wobei der Kompensationsbereich durch die Betriebstemperaturgrenzen (TUSC LIM MAX, TUSC LIM MIN) der ersten Verbrennungsstufe (7a) definiert ist.

14. Kraftwerk nach einem der Ansprüche 11 bis 13, wobei die Steuervorrichtung (5) dazu konfiguriert ist, das Gasturbinenkraftwerk (1) bei steigender Teillast zu betreiben; wobei bei steigender Teillast die Steuervorrichtung (5) dazu konfiguriert ist, das Brennstoffverteilungssystem (16) so zu steuern/regeln, dass der erste Durchsatz verringert wird, um den Anstieg der Leistungsabgabe des Gasturbinenkraftwerks (1) im Kompensationsbereich zu halten.

15. Kraftwerk nach einem der Ansprüche 11 bis 14, wobei die Steuervorrichtung (5) dazu konfiguriert ist, das Gasturbinenkraftwerk (1) bei sinkender Teillast zu betreiben; wobei bei sinkender Teillast die Steuervorrichtung (5) dazu konfiguriert ist, das Brennstoffverteilungssystem (16) so zu steuern/regeln, dass der erste Durchsatz erhöht wird, um die Verringerung der Leistungsabgabe des Gasturbinenkraftwerks (1) im Kompensationsbereich zu halten.

## Revendications

1. Procédé d'exploitation d'une centrale électrique à turbine à gaz ; la centrale électrique à turbine à gaz (1) comprenant un compresseur (2), un ensemble de combustion séquentielle (3) et une turbine (4) disposée en aval de l'ensemble de combustion (3) ; l'ensemble de chambres de combustion séquentielles (3) comprend une première chambre de combustion (10) et une seconde chambre de combustion (12) disposée en aval de la première chambre de combustion (10) ; dans lequel entre la première chambre de combustion (10) et la seconde chambre de combustion (12) est disposé un mélangeur (9) ou une turbine haute pression ; dans lequel la seconde chambre de combustion (12) comprend au moins un étage de combustion (7b, 7c) ;
le procédé comprenant :
- l'actionnement de la centrale à turbine à gaz (1) à charge partielle ;
- pendant le fonctionnement en charge partielle, la fourniture d'un premier débit de carburant à la première chambre de combustion (10) et ensuite l'allumage ou l'extinction d'au moins un étage de combustion (7b, 7c) de la seconde chambre de combustion (12) ;
- la variation du premier débit de combustible lorsque l'étage de combustion (7b ; 7c) de la seconde chambre de combustion (12) est allumé ou éteint de manière à maintenir la variation de la puissance de sortie de la centrale à turbine à gaz (1) comprise dans une plage de compensation ; la plage de compensation étant comprise entre zéro et une limite supérieure définie par les limites de fonctionnement de l'ensemble de chambre de combustion séquentielle (3).

2. Procédé selon la revendication 1, dans lequel la variation du premier débit de combustible est faite sur la base d'une température (TUSC) en aval de la première chambre de combustion (10) et en amont de la seconde chambre de combustion (12).

3. Procédé selon la revendication 1 ou 2, dans lequel la variation du premier débit de carburant comprend une étape de variation du premier débit de carburant.

4. Procédé selon la revendication 1 ou 2, dans lequel la variation du premier débit de carburant comprend la variation progressive du premier débit de carburant.

5. Procédé selon l'une quelconque des revendications précédentes, dans lequel la plage de compensation est définie par les limites de température de fonctionnement (TUSC LIM MAX, TUSC LIM MIN) de la première chambre de combustion (10).

6. Procédé selon l'une quelconque des revendications précédentes, dans lequel le fonctionnement de la centrale à turbine à gaz (1) à charge partielle comprend le fonctionnement à charge partielle croissante ou à charge partielle décroissante.

7. Procédé selon la revendication 6, dans lequel, lors de l'augmentation de la charge partielle, l'allumage ou l'arrêt ultérieur d'au moins un étage de combustion (7b, 7c) de la seconde chambre de combustion (12) comprend l'allumage de la seconde chambre de combustion (12) en fournissant un débit minimal de carburant à la seconde chambre de combustion (12).

8. Procédé selon la revendication 6 ou 7, dans lequel, lors de la diminution de la charge partielle, l'allumage ou l'arrêt ultérieur d'au moins un étage de combustion (7b, 7c) de la seconde chambre de combustion (12) comprend l'arrêt du deuxième étage de combustion (7b ; 7c) en réduisant le deuxième débit de carburant d'un débit de carburant minimum à zéro.

9. Procédé selon l'une quelconque des revendications 6 à 8, dans lequel, à charge partielle croissante, la variation du premier débit de combustible comprend la réduction du premier débit de façon à maintenir l'augmentation de la puissance de sortie de la centrale à turbine à gaz (1) comprise dans la plage de compensation.

10. Procédé selon l'une quelconque des revendications 6 à 9, dans lequel, à charge partielle décroissante, la variation du premier débit de combustible comprend l'augmentation du premier débit de façon à maintenir la réduction de la puissance de sortie de la centrale à turbine à gaz (1) comprise dans la plage de compensation.

11. Centrale électrique à turbine à gaz comprenant :
- un compresseur (2), un ensemble de combustion séquentielle (3) comprenant une première chambre de combustion (10) et une seconde chambre de combustion (12) disposée en aval de la première chambre de combustion (10) ; dans laquelle entre la première chambre de combustion (10) et la seconde chambre de combustion (12) est disposé un mélangeur (9) ou une turbine haute pression ; dans laquelle la seconde chambre de combustion (12) comprend au moins un étage de combustion (7b, 7c) ;
- une turbine (4) disposée en aval de l'ensemble chambre de combustion (3) ;
- un système de distribution de carburant (16), qui est configuré pour fournir du carburant à la première chambre de combustion (10) et à la seconde chambre de combustion (12) ;
- un dispositif de commande (5) configuré pour :
o faire fonctionner la centrale à turbine à gaz (1) en charge partielle ;
o pendant le fonctionnement en charge partielle, réguler le système de distribution de carburant (16) de manière à fournir un premier débit de carburant à la première chambre de combustion (10) et ensuite allumer ou éteindre au moins un étage de combustion (7a, 7b) de la seconde chambre de combustion (12) ;
o réguler le système de distribution de carburant (16) de manière à faire varier le premier débit de carburant lorsque le deuxième étage de combustion (7b, 7c) est allumé ou éteint de manière à maintenir la variation de la puissance de sortie de la centrale à turbine à gaz (1) comprise dans une plage de compensation ; la plage de compensation étant comprise entre zéro et une limite supérieure définie par les limites de fonctionnement de l'ensemble de combustion séquentielle (3).

12. Centrale selon la revendication 11, comprenant un dispositif de mesure de température placé en aval de la première chambre de combustion (10) et en amont de la seconde chambre de combustion (12) ; le dispositif de commande (5) étant configuré pour réguler le système de distribution de carburant (16) sur la base de la température (TUSC) mesurée par le dispositif de mesure de température.

13. Centrale selon la revendication 11 ou 12, dans laquelle la plage de compensation est définie par les limites de température de fonctionnement (TUSC LIM MAX, TUSC LIM MIN) du premier étage de combustion (7a).

14. Centrale selon l'une quelconque des revendications 11 à 13, dans laquelle le dispositif de commande (5) est configuré pour faire fonctionner la centrale à turbine à gaz (1) à une charge partielle croissante ; dans laquelle, à une charge partielle croissante, le dispositif de commande (5) est configuré pour réguler le système de distribution de carburant (16) de manière à réduire le premier débit afin de maintenir l'augmentation de la puissance de sortie de la centrale à turbine à gaz (1) comprise dans la plage de compensation.

15. Centrale selon l'une quelconque des revendications 11 à 14, dans laquelle le dispositif de commande (5) est configuré pour faire fonctionner la centrale à turbine à gaz (1) à une charge partielle décroissante ; dans laquelle, à une charge partielle décroissante, le dispositif de commande (5) est configuré pour réguler le système de distribution de carburant (16) de façon à augmenter le premier débit afin de
maintenir la réduction de la puissance de sortie de la centrale à turbine à gaz (1) comprise dans la plage de compensation.
